# EUROPÄISCHE PATENTSCHRIFT

(11) **EP 0 838 379 B1**
(45) Veröffentlichungstag und Bekanntmachung des Hinweises auf die Patenterteilung: **20.11.2002**
(21) Anmeldenummer: 97115901.7
(22) Anmeldetag: 12.09.1997
(51) Int. Cl.: B60S 1/04

(54) **Schablone zur visuellen Prüfung des Normalenfehlers eines Wischarmes einer Pendelwischervorrichtung**
Template for visual check of the normal error of a wiper arm of an oscillating wiper device
Calibre pour le test visuel de l'erreur normale d'un bras d'un dispositif d'essuie-glace oscillant

(30) Priorität: 23.10.1996 DE 19643689
(43) Veröffentlichungstag der Anmeldung: 29.04.1998
(73) Patentinhaber: Valeo Wischersysteme GmbH, 74321 Bietigheim-Bissingen (DE)
(72) Erfinder: Egner-Walter, Bruno, 74076 Heilbronn (DE)
(74) Vertreter: Dreiss, Fuhlendorf, Steimle & Becker

(56) Entgegenhaltungen:
- EP-A- 0 724 990
- WO-A-96/41735
- DE-A- 4 002 240
- DE-A- 19 535 048

## Beschreibung

Die Erfindung bezieht sich auf eine Schablone zur visuellen Prüfung des Normalenfehlers eines Wischarmes einer Pendelwischervorrichtung für die Scheibe eines Fahrzeuges mit den Merkmalen des Oberbegriffs des Anspruchs 1.

Es ist bekannt, daß die Scheiben eines Fahrzeuges gewölbt bzw. gekrümmt ausgeführt sind, um den Luftwiderstand des Fahrzeuges herabzusetzen. Um andererseits eine gute Wischqualität der an solchen Fahrzeugen verwendeten Pendelwischervorrichtungen zu erreichen, soll das Wischerblatt in jeder Betriebsstellung rechtwinklig auf der zu wischenden Scheibe aufliegen. Bei gewölbten bzw. gekrümmten Scheiben wäre also eine ständige Anpassung der Winkelstellung des Wischerblattes in Abhängigkeit von der Scheibenwölbung bzw. dem Wischwinkel erforderlich. Hierzu sind bereits verschiedene Vorschläge bekannt, welche ein Verdrehen des Wischerblattes bzw. des Wischarmes um seine Längsachse vorsehen. Derartige Wischarme bzw. Wischhebel verursachen jedoch hohe Herstellungskosten und sind außerdem störungsanfällig.

Eine sehr verbreitet angewendete Kompromißlösung geht davon aus, daß das Wischblatt im wichtigsten Bereich des Wischfeldes, nämlich etwa in dessen mittlerem Bereich, senkrecht auf der Scheibe stehen soll. In den Randbereichen, d.h. in den Umkehrstellungen bzw. in der Parkstellung weicht dann die tatsächliche Stellung des Wischblattes um einen spitzen Winkel von der senkrechten Stellung ab, welche etwa zwischen 0 und 5 Grad beträgt. Diese gewollte Abweichung wird in Fachkreisen auch als Normalenfehler bezeichnet. Erreicht bzw. eingestellt wird dieser gewünschte Normalenfehler beispielsweise durch eine entsprechend von der senkrechten Stellung auf der Scheibe abweichende Stellung der Wischerwelle.

Durch verschiedene Einwirkungen, wie beispielsweise ein unsachgemäßes Demontieren des Wischarmes oder durch den Einfluß einer Autowaschanlage kann es vorkommen, daß die gewünschte Stellung des Wischblattes gegenüber der Scheibe, welche den normalen Fehler einschließt, verändert worden ist. Zumeist macht beim Betrieb der Scheibenwischvorrichtung ein Rattern der Wischblätter auf der Scheibe auf diesen Fehler aufmerksam, der eine wesentliche Verschlechterung der Wischqualität zur Folge hat. In dem Buch "Wischer- und Wascheranlagen für Fahrzeuge" vom Autor Eckhardt Schmid, Verlag Moderne Industrie AG, Landsberg/Lech, ISBN 3-478-93089-8, Seite 64 und Abbildung 47, wird empfohlen, beim Auftreten einer Rattererscheinung der Wischblätter die ordnungsgemäße Stellung der Wischblätter auf der zu wischenden Scheibe zu kontrollieren und ggf. zu korrigieren. Hierzu soll der Wischarm durch Ausschalten der Zündung im mittleren Bereich des Wischfeldes angehalten und das Wischblatt vom Wischarm entfernt werden. Nunmehr ist zu prüfen, ob der Wischarmhaken, d.h. der vom Wischblatt befreite Verbindungsabschnitt des Wischarmes für die Wischarm-Wischblatt-Verbindung, mit seiner Unterseite plan auf der Scheibe aufliegt. Falls ein keilförmiger Luftspalt zwischen dem Wischarmhaken und der Scheibe sichtbar ist, ist eine entsprechende Korrektur der Stellung erforderlich.

Nachteilig an dieser empfohlenen Art der Kontrolle bzw. Korrektur der Wischblattstellung ist, daß der Verbindungsabschnitt des Wischarmes, also der Wischarmhaken, mit seiner Unterseite unmittelbar auf der zu wischenden Scheibe aufliegen muß. Es ist schwierig, durch visuelle Betrachtung die Stellung dieses Wischarmhakens gegenüber der Scheibe zu beurteilen, da es nicht möglich ist, das Auge in die Kontaktebene zwischen Wischarm und Scheibe zu bringen. Andererseits besteht natürlich die große Gefahr, daß die Scheibe durch ungewolltes Aufschlagen des Wischarmes beschädigt oder zerkratzt wird.

Aus der DE 195 35 048 A1 ist ein gattungsgemäßes Einstell- und Meßgerät bekannt geworden, das sehr aufwendig ausgebildet ist und eine Vielzahl von Einzelteilen aufweist. Das Einstell- und Meßgerät ermöglicht das Messen und Ablesen des momentanen Normalenfehlers. Allerdings gibt das Einstell- und Meßgerät keinerlei Information darüber, ob der gemessene Normalenfehler einem für die betreffende Pendelwischvorrichtung bzw. für den betreffenden Fahrzeugtyp vorgesehenen Normalenfehler entspricht.

Die Aufgabe der Erfindung besteht in der Beseitigung dieser Mängel durch Bereitstellen eines billigen und einfach zu handhabenden Mittels für die Kontrolle der exakten Stellung des Wischblattes bzw. des Wischarmes im Vergleich zur Scheibe.

Erfindungsgemäß wird die Aufgabe durch eine Schablone mit den Merkmalen des Anspruchs 1 gelöst, wobei im Sinne der Erfindung der Normalenfehler auch den Betrag von 0 Grad einschließen soll. Durch die Verwendung der Schablone, welche zwischen der Scheibe und dem vom Wischblatt befreiten Wischarm anzuordnen ist, wird verhindert, daß der Wischarm unter der Wirkung seiner Anpreßfeder versehentlich unmittelbar auf die Oberfläche der Scheibe aufschlagen und diese beschädigen oder zerkratzen kann. Weiterhin befindet sich die für die Prüfung des Normalenfehlers maßgebliche Kontaktstelle zwischen der Prüffläche der Schablone und dem Wischarm nunmehr in einer gewissen Höhe über der Oberfläche der Scheibe. Dadurch ist es wesentlich besser möglich, das menschliche Auge zur Beurteilung der Stellung des Wischarmes in eine über der Scheibenoberfläche liegenden Betrachtungsebene zu bringen. Das erleichtert wesentlich die visuelle Feststellung, ob die Unterseite des Verbindungsabschnittes des Wischarmes plan auf der Prüffläche der Schablone aufliegt und somit die Wischarmstellung gegenüber der Scheibe korrekt dem vorgegebenen normalen Fehler entspricht. Falls jedoch zwischen der Unterseite des Verbindungsabschnittes des Wischarms und der Prüffläche der Schablone ein keilförmiger Luftspalt visuell wahrnehmbar ist, liegt eine Abweichung der Wischarmstellung von dem beabsichtigten bzw. vorgeschriebenen normalen Fehler vor. Wenn diese Abweichung nicht zu groß ist, kann durch entsprechendes vorsichtiges Verbiegen des Wischarmes eine Korrektur vorgenommen werden. Bei größerer Abweichung wird wahrscheinlich der Austausch des Wischarmes erforderlich.

Vorteilhafte Weiterbildungen der Erfindung sind in den Unteransprüchen 2 bis 8 angegeben.

Eine Weiterbildung gemäß Anspruch 2 ermöglicht es, mit Hilfe der Schablone den normalen Fehler des Wischarmes in dessen Parkstellung zu prüfen. Entgegen der bekannten, empfohlenen Methode zur Prüfung und Korrektur des Normalenfehlers muß bei dieser Weiterbildung der Wischarm nicht erst in eine ohnehin nicht genau definierte Stellung im mittleren Bereich des Wischfeldes gebracht werden. Die Prüfung des Normalenfehlers erfolgt also immer in der definierten Parkstellung des Wischarmes, so daß die Prüfgenauigkeit verbessert ist.

Eine Weiterbildung gemäß Anspruch 3 gewährleistet eine gute visuelle Wahrnehmbarkeit der Stellung des Wischarmes im Vergleich zu der Schablone.

Es ist noch zu bemerken, daß eine Schablone gemäß Anspruch 1 als Massenprodukt in Form eines Spritzgußteiles aus Kunststoff äußerst kostengünstig herstellbar ist.

Wenn eine erfindungsgemäße Schablone entsprechend der Weiterbildung gemäß Anspruch 4 insgesamt ein längliches Teil ist, dessen Dicke der Breite seiner Prüffläche entspricht, ist die Schablone äußerst platzsparend aufzubewahren. Außerdem kann eine derartige Schablone kostengünstig durch Erzeugen eines Profilstranges im Extrusions- oder Stranggießoder Strangpreßverfahren und anschließendes Ablängen vom erzeugten Strang hergestellt werden.

Um eine kippelfreie und genau definierte tangentiale Auflage der Schablone auf der Oberfläche der Scheibe zu gewährleisten, sieht eine Weiterbildung gemäß Anspruch 5 vor, daß die Schablone an der auf die Scheibe aufzusetzenden Seite zwei Füße aufweist, die vorzugsweise jeweils an einem der gegenüberliegenden Enden dieser Seite der Schablone vorgesehen sind.

Eine andere Weiterbildung der Erfindung gemäß Anspruch 6 sieht eine Dreipunktauflage der Schablone auf der Scheibe vor. Dieses ist durch drei Füße an der auf die Scheibe aufzusetzenden Seite der Schablone erreichbar, wobei vorzugsweise ein Fuß mittig an einem Ende der Schablonenunterseite und die übrigen zwei Füße am gegenüberliegenden Ende der Schablonenunterseite und dabei beiderseits in einem Abstand von der senkrechten Mittelebene der Schablone angeordnet sind. Diese Weiterbildung hat den besonderen Vorteil, daß die Schablone beim Prüfen des Normalenfehlers nicht festgehalten werden muß. Die Dreipunktauflage und die Anpreßkraft des Wischarmes in Richtung der Scheibe sorgen für einen entsprechenden Halt der Schablone während des Prüfvorganges.

Bevorzugt wird eine Weiterbildung der Erfindung gemäß Anspruch 7, welche vorsieht, daß die Schablone mehrere Prüfflächen aufweist, die jeweils in einem anderen Winkel α gegenüber der Scheibe verlaufen. Wenn diese verschiedenen Prüfflächen jeweils für die normalen Fehler unterschiedlicher Fahrzeugtypen ausgebildet sind, ist eine derartige Schablone universell anwendbar.

Eine Weiterbildung gemäß Anspruch 8 ist darauf gerichtet, daß die Schablone die stilisierte Form eines Fahrzeuges oder eines Wischblattes oder dergleichen aufweist, wobei eine derartige Schablone außerdem noch als Schlüsselanhänger oder dergleichen ausgebildet sein kann. Diese Weiterbildung dient im wesentlichen einer ansprechenden Stilistik der Schablone bzw. einer Aufbewahrungsmöglichkeit der Schablone unmittelbar am Fahrzeugschlüssel.

Anhand von Ausführungsbeispielen ist die Erfindung nachfolgend näher beschrieben. In den zugehörigen Zeichnungen zeigen:
- Fig. 1: einen Wischarm einer Pendelwischervorrichtung,
- Fig. 2: eine Schablone während der Prüfung des Normalenfehlers,
- Fig. 3: eine Draufsicht von Fig. 2,
- Fig. 4 a u.b: die Prüfung einer vom vorgeschriebenen Wert des Normalenfehlers abweichenden Stellung des Wischarmes,
- Fig. 5: eine Schablone mit mehreren Prüfflächen,
- Fig. 6 a - c: verschiedene stilistische Formen einer Schablone zur visuellen Prüfung des Normalenfehlers.

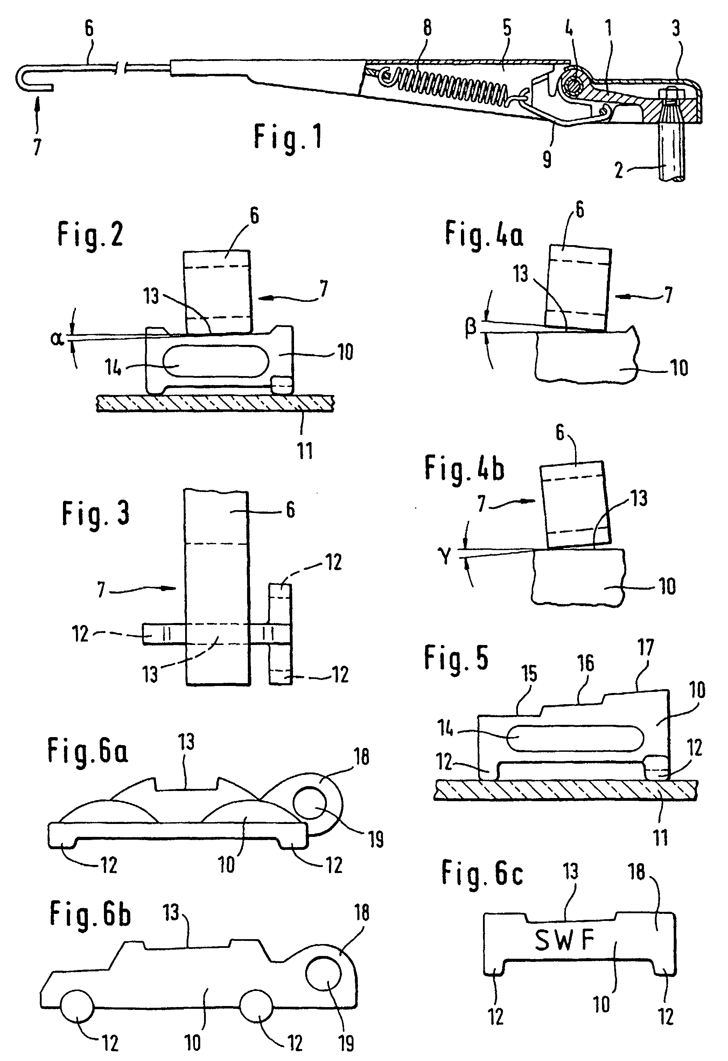

In Fig. 1 ist ein Wischarm einer Pendelscheibenwischervorrichtung teilweise geschnitten dargestellt. Der Wischarm besitzt ein Befestigungsteil 1, das drehfest an einer pendelnd antreibbaren Wischerwelle 2 befestigt ist. Eine Abdeckkappe 3 überdeckt das gesamte Befestigungsteil 1. Am freien Ende des Befestigungsteiles 1 ist um die Achse 4 schwenkbar das Gelenkteil 5 angelenkt. In an sich bekannter Weise ist in Verlängerung des Gelenkteiles 5 eine Wischstange 6 an dem Gelenkteil 5 befestigt. An ihrem freien Ende besitzt die Wischstange 6 einen Verbindungsabschnitt 7, der in diesem Fall als Haken ausgebildet ist. Über den Verbindungsabschnitt 7 ist der Wischarm in bekannter Weise mit einem Wischblatt verbindbar, welches mit seiner Wischleiste auf der zu wischenden Scheibe aufliegt und diese beim Betrieb der Wischervorrichtung in einem vorgegebenen Wischfeld überstreicht. Eine als Zugfeder ausgebildete Anpreßfeder 8 ist unter Vorspannung mit einem Ende am Gelenkteil 5 bzw. an dem in das Gelenkteil 5 hineinragenden Ende der Wischstange 6 und am anderen Ende mittels eines C-Bügels 9 hinter die Achse 4 am Befestigungsteil 1 eingehängt.

Fig. 2 zeigt die Anwendung einer Schablone 10 zur visuellen Prüfung des Normalenfehlers eines Wischarmes gemäß Fig. 1. Dabei ist in Fig. 2 eine vergrößerte Ansicht auf den Verbindungsabschnitt 7 mit Blick in Längsrichtung des Wischarmes dargestellt. Die Schablone 10 ist unterhalb des von einem Wischblatt befreiten Verbindungsabschnittes 7 an der Wischstange 6 auf die Oberfläche der Scheibe 11 des Fahrzeuges aufgesetzt. Dabei ist die Schablone 10 im wesentlichen quer zur Längsrichtung des Wischarmes bzw. der Wischstange 6 angeordnet und durch eine Dreipunktauflage kippelfrei auf die Scheibe 11 aufgesetzt. Die Dreipunktauflage wird dabei, wie insbesondere aus Fig. 3 ersichtlich ist, durch drei Füße 12 realisiert, welche von der Unterseite der Schablone 10 in Richtung auf die Scheibe 11 abstehen. Diese Dreipunktauflage hat den besonderen Vorteil, daß die Schablone 10 eine exakt definierte Position auf der Scheibe 11 einnimmt und während des Prüfvorganges nicht gehalten werden muß. Die Unterseite des Verbindungsabschnittes 7 liegt auf einer Prüffläche 13 der Schablone 10 auf, die sich an der Oberseite der Schablone 10 befindet. Wichtig hierbei ist, daß die Prüffläche 13 so ausgebildet ist, daß sie bei auf die Scheibe 11 aufgesetzter Schablone 10 in einem Winkel α gegenüber der Scheibe 11 verläuft, welcher dem für die verwendete Pendelwischer-vorrichtung bzw. für das betreffende Fahrzeugmodell vorgesehenen normalen Fehler entspricht.

In den Fig. 2 und 3 ist erkennbar, daß die Prüffläche 13 eine lange und schmale rechteckige Gestalt aufweist, wobei die Prüffläche 13 länger ist als die Breite der Wischstange 6. Diese Gestalt der Prüffläche 13 bewirkt eine gute visuelle Erkennbarkeit der Lage der Unterseite des Verbindungsabschnittes 7 in bezug auf die Prüffläche 13. Der mittlere Bereich 14 der Schablone 10 kann als materialsparender Durchbruch oder als die Griffsicherheit der Schablone verbessernde Erhebung oder Vertiefung ausgebildet sein.

In den Fig. 4a und b ist erkennbar, daß die Stellung der Wischstange 6 bzw. des Verbindungsabschnittes 7 nicht korrekt ist, weil sie von dem vorgesehenen normalen Fehler, d.h. von dem vorgegebenen Winkel α abweicht. Visuell erkennbar ist diese Abweichung durch einen keilförmigen Luftspalt, der zwischen der Unterseite des Verbindungsabschnittes 7 und der Prüffläche 13 der Schablone 10 gebildet ist. In Fig. 4a liegt der Verbindungsabschnitt 7 nur mit der rechten Kante auf der Prüffläche 13 der Schablone 10 auf, nach der linken Seite hin öffnet sich der keilförmige Luftspalt mit einem Winkel β. Im Vergleich mit der in Fig. 2 dargestellten richtigen Stellung des Wischarmes stellt der Winkel β eine Abweichung vom vorgegebenen Normalfehler in negativer Richtung dar. Bei dem Ausführungsbeispiel gemäß Fig. 4b ist zwischen der Unterseite des Verbindungsabschnittes 7 und der Prüffläche 13 der Schablone 10 ebenfalls ein keilförmiger Luftspalt erkennbar, der jedoch nach der rechten Seite hin geöffnet ist. Der zwischen der Unterseite des Verbindungsabschnittes 7 und der Prüffläche 13 gebildete Winkel β stellt somit eine Abweichung vom vorgegebenen normalen Fehler in positiver Richtung dar. In beiden zuvor beschriebenen Fällen, gemäß Fig. 4a und b, ist eine Korrektur des Normalenfehlers des Wischarmes erforderlich, da ansonsten erhebliche Einbußen hinsichtlich der Wischqualität hingenommen werden müssen.

In Fig. 5 ist eine universell verwendbare Schablone 10 dargestellt. Diese Schablone 10 zeichnet sich durch die drei Prüfflächen 15,16 und 17 aus. Diese drei Prüfflächen 15,16 und 17 sind jeweils in einem anderen, jeweils verschiedenen normalen Fehlern entsprechenden Winkel α gegenüber der Scheibe 11 angeordnet. Beispielsweise könnte die Prüffläche 15 im Winkel α = 0 Grad, die Prüffläche 16 im Winkel α = 3 Grad und die Prüffläche 17 im Winkel α = 5 Grad angeordnet sein. Damit wäre das hauptsächliche Spektrum allgemeingebräuchlicher normalen Fehler durch diese eine Schablone 10 mit drei Prüfflächen 15,16 und 17 abgedeckt. Außer dem wesentlichen Unterschied hinsichtlich der Prüfflächen entspricht die Schablone gemäß Ausführungsbeispiel von Fig. 5 im wesentlichen derjenigen des Ausführungsbeispieles gemäß den Fig. 2 und 3.

In den Ausführungsbeispielen gemäß der Fig. 6a - c sind die Schablonen 10 jeweils ein längliches Teil, dessen Dicke der Breite der Prüffläche 13 entspricht. Deshalb besitzen diese Schablonen 10 jeweils nur zwei Füße 12 an ihrer Unterseite. In diesen Fällen sollte aber die Schablone 10 beim Prüfen des Normalenfehlers festgehalten werden, um ein Umkippen unter der Wirkung der Spannkraft des aufliegenden Wischarmes zu vermeiden. Zum Festhalten der Schablonen 10 sind hierbei entsprechende Halteabschnitte 18 vorgesehen. In den Fig. 6a und b besitzen diese Halteabschnitte 18 jeweils einen Durchbruch 19, so daß in diesen Fällen die Schablone 10, welche außerdem in Fig. 6a zur Verbesserung der dekorativen Wirkung die Form eines stilisierten Wischblattes und in Fig. 6b die Form eines stilisierten PKW aufweist, als Schlüsselanhänger benutzt werden kann. In Fig. 6c ist noch zu erkennen, daß die nicht zur Auflage auf die Scheibe 11 bzw. als Prüffläche 13 dienenden Flächen mit einer Beschriftung bzw. andersartigen Zeichen versehen werden können.

### Bezugszeichenliste

- 1: Befestigungsteil
- 2: Wischerwelle
- 3: Abdeckkappe
- 4: Achse
- 5: Gelenkteil
- 6: Wischstange
- 7: Verbindungsabschnitt
- 8: Anpreßfeder
- 9: C-Bügel
- 10: Schablone
- 11: Scheibe
- 12: Fuß
- 13: Prüffläche
- 14: Bereich
- 15: Prüffläche
- 16: Prüffläche
- 17: Prüffläche
- 18: Halteabschnitt
- 19: Durchbruch
- α: Winkel
- β: Winkel
- β: Winkel

## Patentansprüche

1. Schablone zur visuellen Prüfung des Normalenfehlers eines Wischarmes einer Pendelwischervorrichtung für eine Scheibe (11) eines Fahrzeuges, wobei die Schablone (10) unter dem vom Wischblatt befreiten Verbindungsabschnitt (7) des Wischarmes für die Wischarm-Wischblatt-Verbindung in einer definierten und reproduzierbaren Lage auf die Scheibe (11) aufsetzbar ist und wobei die Schablone (10) in einer Höhe über der Oberfläche der Scheibe (11) eine ebene Prüffläche (13,15,16,17) zur Auflage des Verbindungsabschnittes (7) aufweist, **dadurch gekennzeichnet, daß** die Prüffläche (13) so ausgebildet ist, daß sie bei auf die Scheibe (11) aufgesetzter Schablone in dem dem Normalenfehler entsprechenden, für die betreffende Pendelwischvorrichtung bzw. für den betreffenden Fahrzeugtyp vorgesehenen Winkel α gegenüber der Scheibe (11) verläuft.

2. Schablone nach Anspruch 1, **dadurch gekennzeichnet, daß** bei auf die Scheibe aufgesetzter Schablone der Winkel α der Prüffläche (13) gegenüber der Scheibe (11) dem Normalenfehler des Wischarmes in dessen Parkstellung entspricht.

3. Schablone nach Anspruch 1 oder 2, **dadurch gekennzeichnet, daß** die Prüffläche (13,15,16,17) der Schablone (10) eine längliche und schmale Form besitzt, wobei die quer zum Wischarm anzuordnende Länge der Prüffläche (13,15,16,17) mindestens so groß wie die Breite des Verbindungsabschnittes (7) des Wischarmes ist, und daß die Höhe der Prüffläche (13,15,16,17) der Schablone (10) über der Oberfläche der Scheibe (11) mindestens der Breite des Verbindungsabschnittes (7) des Wischarmes entspricht.

4. Schablone nach einem der vorhergehenden Ansprüche, **dadurch gekennzeichnet, daß** die Schablone (10) insgesamt ein längliches Teil ist, dessen Dicke der Breite der Prüffläche (13) entspricht.

5. Schablone nach Anspruch 4, **dadurch gekennzeichnet, daß** die Schablone (10) an der auf die Scheibe (11) aufzusetzenden Seite zwei voneinander beabstandete Füße (12) aufweist, die vorzugsweise an den gegenüberliegenden Enden dieser Schablonenseite vorgesehen sind.

6. Schablone nach einem der Ansprüche 1 bis 3, **dadurch gekennzeichnet, daß** die Schablone (10) an der auf die Scheibe (11) aufzusetzenden Seite eine Dreipunktauflage aufweist.

7. Schablone nach einem der vorhergehenden Ansprüche, **dadurch gekennzeichnet, daß** die Schablone (10) mehrere Prüfflächen (15,16,17) aufweist, die bei auf die Scheibe aufgesetzter Schablone jeweils in einem anderen Winkel α gegenüber der Scheibe (11) verlaufen.

8. Schablone nach einem der vorhergehenden Ansprüche, **dadurch gekennzeichnet, daß** die Schablone (10) die stilisierte Form eines Fahrzeuges oder eines Wischblattes oder dergleichen aufweist und/oder als Schlüsselanhänger oder dergleichen ausgebildet ist.

## Claims

1. Template for visually checking the normal error of a wiper arm of an oscillating wiper device for a windscreen (11) of a vehicle, wherein the template (10) can be placed under the connecting portion (7) freed from the wiper blade of the wiper arm for the wiper arm/wiper blade connection in a defined reproducible position on the windscreen (11) and wherein the template (10) has a flat checking face (13, 15, 16, 17) at a level above the surface of the windscreen (11) for supporting the connecting portion (7), **characterised in that** the checking face (13) is designed in such a way that when the template is placed on the windscreen (11), it extends at the angle α relative to the windscreen (11) corresponding to the normal error and provided for the relevant oscillating wiper device or for the relevant type of vehicle.

2. Template according to claim 1, **characterised in that** when the template is placed on the windscreen, the angle α of the checking face (13) relative to the windscreen (11) corresponds to the normal error (1) of the wiper arm in the parking position thereof.

3. Template according to claim 1 or 2, **characterised in that** the checking face (13, 15, 16, 17) of the template (10) has an elongate narrow form, the length of the checking face (13, 15, 16, 17) to be arranged transverse to the wiper arm being at least as large as the width of the connecting portion (7) of the wiper arm, and **in that** the level of the checking face (13, 15, 16, 17) of the template (10) above the surface of the windscreen (11) corresponds at least to the width of the connecting portion (7) of the wiper arm.

4. Template according to any one of the preceding claims, **characterised in that** the template (10) is in total an elongate part, the thickness of which corresponds to the width of the checking face (13).

5. Template according to claim 4, **characterised in that** the template (10) comprises on the side placed on the windscreen (11) two feet (12) which are spaced from one another and are preferably provided on the opposing ends of this side of the template.

6. Template according to any one of claims 1 to 3, **characterised in that** the template (10) comprises a three point support on the side to be placed on the windscreen (11).

7. Template according to any one of the preceding claims, **characterised in that** the template (10) comprises a plurality of checking faces (15, 16, 17), respectively extending at a different angle α relative to the windscreen (11) when the template is placed on the windscreen.

8. Template according to any one of the preceding claims, **characterised in that** the template (10) has the stylised form of a vehicle or a wiper blade or the like and/or is designed as a key fob or the like.

## Revendications

1. Calibre pour le contrôle visuel de l'erreur normale d'un bras d'essuie-glace d'un dispositif essuie-glace oscillant pour une vitre (11) d'un véhicule, le calibre (10) pouvant être posé sur la vitre (11) dans une position définie et reproductible en dessous de la partie de liaison (7) du bras d'essuie-glace, prévue pour relier le balai d'essuie-glace au bras et alors libérée du balai, et le calibre (10) présentant, à une hauteur située au-dessus de la surface de la vitre (11), une surface de contrôle plane (13, 15, 16,17) pour y appuyer la partie de liaison (7), **caractérisé en ce que** la surface de contrôle (13) est conçue de telle sorte que, lorsque le calibre est posé sur la vitre (11), elle s'étend par rapport à la vitre sous l'angle (α), correspondant à l'erreur normale, prévu pour le dispositif essuie-glace oscillant concerné ou encore pour le type de véhicule concerné.

2. Calibre selon la revendication 1, **caractérisé en ce que**, lorsque le calibre est posé sur la vitre, l'angle (α) de la surface de contrôle (13) par rapport à la vitre (11) correspond à l'erreur normale du bras d'essuie-glace dans sa position d'arrêt fixe.

3. Calibre selon la revendication 1 ou 2, **caractérisé en ce que** la surface de contrôle (13, 15, 16,17) du calibre (10) possède une forme étroite et oblongue, la longueur, à disposer transversalement au bras d'essuie-glace, de la surface de contrôle (13, 15, 16,17) étant au moins égale à la largeur de la partie de liaison (7) du bras d'essuie-glace, et **en ce que** la hauteur de la surface de contrôle (13) du calibre (10) au-dessus de la surface de la vitre (11) correspond au moins à la largeur de la partie de liaison (7) du bras d'essuie-glace.

4. Calibre selon l'une quelconque des revendications précédentes, **caractérisé en ce que** le calibre (10) est globalement une pièce oblongue dont l'épaisseur correspond à la largeur de la surface de contrôle (13).

5. Calibre selon la revendication 4, **caractérisé en ce que** le calibre (10) présente, sur le côté à poser sur la vitre (11), deux pieds (12) distants l'un de l'autre, qui sont de préférence prévus aux extrémités opposées de ce côté du calibre.

6. Calibre selon l'une quelconque des revendications 1 à 3, **caractérisé en ce que** le calibre (10) présente, sur le côté à poser sur la vitre (11), un appui en trois points.

7. Calibre selon l'une quelconque des revendications précédentes, **caractérisé en ce que** le calibre (10) présente plusieurs surfaces de contrôle (15, 16,17) qui, lorsque le calibre est posé sur la vitre, s'étendent chacune sous un angle (α) différent par rapport à la vitre (11).

8. Calibre selon l'une quelconque des revendications précédentes, **caractérisé en ce que** le calibre (10) présente la forme stylisée d'un véhicule ou d'un balai d'essuie-glace ou analogue, et/ou est conçu comme porte-clés ou analogue.
